# EUROPÄISCHE PATENTSCHRIFT

(11) **EP 1 914 113 B1**
(45) Veröffentlichungstag und Bekanntmachung des Hinweises auf die Patenterteilung: **03.06.2009**
(21) Anmeldenummer: 07020306.2
(22) Anmeldetag: 17.10.2007
(51) Int. Cl.: B60P 1/26

(54) **Kippbrücke für ein Kipperfahrzeug**
Tipping body for a dumper truck
Benne basculant pour un véhicule à benne

(30) Priorität: 20.10.2006 DE 102006049555
(43) Veröffentlichungstag der Anmeldung: 23.04.2008
(73) Patentinhaber: Franz Xaver Meiller Fahrzeug- und Maschinenfabrik-GmbH & Co KG, 80997 München (DE)
(72) Erfinder: Riedl, Stefan, 80992 München (DE)
(74) Vertreter: Tiesmeyer, Johannes

(56) Entgegenhaltungen:
- DE-U1-3202004 004 92
- GB-A- 2 100 678
- US-A- 1 332 424
- US-A- 4 691 956

## Beschreibung

Die Erfindung betrifft eine Kippbrücke für ein Kipperfahrzeug, die folgende Merkmale aufweist:
- eine Kippbrückenbasis mit einer Ladefläche,
- Bordwände zur seitlichen Ladevolumenbegrenzung an den Ladeflächenrändern, von denen wenigstens eine erste Bordwand mittels einer lösbaren unteren Klappgelenkanordnung und einer lösbaren oberen Pendelgelenkanordnung an der Kippbrücke in der Weise festgelegt ist, dass sie wahlweise um eine in Ladebodennähe verlaufende Klapp-Schwenkachse der Klappgelenkanordnung - oder um eine obere Pendel-Schwenkachse der Pendelgelenkanordnung - aus ihrer Verschlussstellung heraus in Öffnungsstellungen schwenkbar ist, und
- eine Bordwandentlastungseinrichtung zur Begrenzung der Aufklappgeschwindigkeit der ersten Bordwand bei der Aufklapp-Schwenkbewegung um die Klapp-Schwenkachse, wobei die Bordwandentlastungseinrichtung eine Federanordnung zur Ausübung einer der Gewichtskraft der ersten Bordwand bei deren Aufklapp-Schwenkbewegung entgegenwirkenden Kraft aufweist.

Kipperfahrzeuge mit Kippbrücken der vorstehend genannten Art sind weit verbreitet im Einsatz. Es handelt sich dabei üblicherweise um große Baustellenfahrzeuge mit entsprechend großen Kippbrückenbordwänden. Da die Bordwände robust ausgebildet sein müssen, sind sie üblicherweise schwer, so dass auf Grund ihrer Gewichtskraft ein erhebliches Drehmoment bei der Öffnungs-Schwenkbewegung um die Klapp-Schwenkachse zur Wirkung kommt. Dieses Drehmoment wird durch ein Gegendrehmoment teilkompensiert, das von der Bordwandentlastungseinrichtung erzeugt wird.

Bei Weglassung der Bordwandentlastungseinrichtung wären die schweren Bordseitenwände sowohl beim Öffnen als auch beim Schließen nur schwierig handhabbar. Die Bordwandentlastungseinrichtung dient somit der einfacheren Handhabbarkeit der Bordseitenwand und in diesem Zusammenhang auch der größeren Arbeitssicherheit für die Bedienungsperson.

Bei der Federanordnung der Bordwandentlastungseinrichtung handelt es sich üblicherweise um ein Federpaket aus mehreren nebeneinander und parallel zueinander angeordneten Schraubenzugfedern, die an ihren Enden an gemeinsamen Halterungsbeschlägen befestigt sind. Üblicherweise befindet sich die Federanordnung an der Kippbrückenvorderseite und ist dort mit einem Ende an einem Rahmenteil der vorderen Kippbrücken-Bordwand gehalten, wohingegen das andere Ende der Federanordnung über Kraftübertragungsmittel mit der seitlichen Bordwand verbunden ist. Bei bekannten Bordwandentlastungseinrichtungen umfassen diese Kraftübertragungsmittel einen mehrfach an Umlenkrollen umgelenkten Seilzug, der sich zwischen der Federanordnung und der seitlichen Bordwand erstreckt.

Aus DE 202 004 004 923 U ist auch bereits eine Bordwandentlastungseinrichtung bekannt, bei der ein solcher mehrfach umgelenkter Seilzug über ein Kulissenelement mit der seitlichen Bordwand gekoppelt ist. Das Kulissenelement weist eine kontinuierlich gekrümmte Kulissenführung auf, in der ein endseitig an dem Seilzug befestigter Kulissengleitkörper verschiebbar geführt aufgenommen ist. Auf diese Weise wird erreicht, dass das von der Bordwandentlastungseinrichtung auf die seitliche Bordwand ausgeübte Rückhalte-Drehmoment in einer bestimmten Weise von der jeweiligen Schwenkwinkelstellung der seitlichen Bordwand beim Klappen um die Klapp-Schwenkachse abhängt. Damit kann das Gegenhalte-Drehmoment während des Aufklappvorganges so moduliert werden, dass dem Umstand Rechnung getragen wird, dass auch das auf die Gewichtskraft der seitlichen Bordwand zurückgehende Drehmoment während des Schwenkvorgangs um die Klapp-Schwenkachse vorn jeweiligen Schwenkwinkel abhängt und somit variiert. Der Klappvorgang der seitlichen Bordwand kann somit gleichmäßiger ablaufen.

Die DE 202 004 004 923 U beschreibt den Oberbegriff des Anspruchs 1.

Damit im Pendelbetrieb die Schwenkbewegungen der seitlichen Bordwand um die Pendel-Schwenkachse möglichst unbeeinflusst von der Bordwandentlastungseinrichtung erfolgen können, ist die zur seitlichen Bordwand hin letzte Umlenkrolle des Seilzugs bei den bekannten Kippbrücken so an der vorderen Bordwand gelagert, dass ihre Umlenkrollenachse in der Nähe der Pendel-Schwenkachse und parallel zu dieser verläuft.

Insbesondere im Zusammenhang mit großen und schweren seitlichen Bordwänden bereitet die Installation einer solchen konventionellen Bordwandentlastungseinrichtung mit Seilzugsystem Probleme, da sie relativ viel Platz für einen hinreichend langen Seilzugweg und für entsprechend groß dimensionierte Seil-Umlenkrollen erfordert.

Der Erfindung liegt die Aufgabe zugrunde, eine Kippbrücke der eingangs genannten Art bereitzustellen, bei der die Bordwandentlastungseinrichtung unter Verzicht auf ein konventionelles Seilzugsystem zuverlässig und komfortabel auch bei großen und schweren Bordwänden funktioniert.

Zur Lösung dieser Aufgabe wird eine Kippbrücke mit den Merkmalen des Anspruchs 1 vorgeschlagen. Bei der erfindungsgemäßen Kippbrücke weist die Bordwandentlastungseinrichtung zusätzlich zu der Federanordnung einen Kopplungshebel auf, der dazu eingerichtet ist, die erste Bordwand bei deren Aufklapp-Schwenkbewegung kraftübertragend mit der Federanordnung zu verbinden und die erste Bordwand bei deren Schwenkbewegung um die Pendelschwenkachse von der Federanordnung kraftübertragungsmäßig im Wesentlichen zu entkoppeln, wobei die Federanordnung und der Kopplungshebel durch ein Kulissenelement miteinander verbunden sind, welches eine Kraftübertragungsstelle mit Kulissenführungsspiel im Kraftübertragungsweg zwischen der Federanordnung und dem Kopplungshebel bei der Schwenkbewegung der ersten Bordwand um die Klapp-Schwenkachse bietet.

Die Federanordnung steht über das Kulissenelement mit dem Kopplungshebel in Verbindung, wobei keine Seilzüge oder dgl. im Kraftübertragungsweg vorgesehen sind.

Das Kulissenelement ist vorzugsweise an dem Kopplungshebel befestigt. Es weist eine Führungsaussparung auf, in der ein Anschlusszapfen der Federanordnung als Kulissengleitelement dem Kulissenführungsspiel entsprechend geführt verschiebbar aufgenommen ist.

Die Federanordnung besteht vorzugsweise aus wenigstens einer Zugfeder und aus Halterungsbeschlägen mit Befestigungsmitteln an den Zugfederenden. Bei Kippbrücken mit schweren Bordwänden empfiehlt es sich, ein Federpaket aus mehreren parallel nebeneinander angeordneten Schraubenzugfedern zu verwenden, die an ihren Enden gemeinsame Halterungsbeschläge aufweisen.

Vorzugsweise erstreckt sich die Federanordnung an einer quer zur ersten Bordwand verlaufenden zweiten Bordwand, wobei sie mit ihrem vorn Kopplungshebel entfernten Ende an der zweiten Bordwand befestigt ist. Die erste Bordwand ist vorzugsweise eine seitliche Bordwand, wobei die zweite Bordwand üblicherweise die vordere Kippbrückenwand sein wird.

Gemäß einer bevorzugten Ausführungsform der Erfindung ist die erste Bordwand in ihrer Verschlussstellung an einem Haltepfosten der Kippbrücke verriegelbar, wobei sie zu diesem Zweck einen Verriegelungszapfen aufweist, der im verriegelten Zustand in einer Verriegelungsausnehmung des Haltepfostens aufgenommen ist, wobei ein an dem Haltepfosten zwischen einer Verriegelungsstellung und einer Freigabestellung bewegbar geführter Riegel den Verriegelungszapfen in der Verriegelungsausnehmung sichert und wobei die Verriegelungsausnehmung und der darin gesicherte Verriegelungszapfen Elemente der Pendelgelenkanordnung bilden, so dass die erste Bordwand nach Lösen der Klappgelenkanordnung schwenkbeweglich um die mit der Achse des Verriegelungszapfens übereinstimmende Pendel-Schwenkachse ist.

Der Kopplungshebel ist an einem Ende drehgelenkig mit dem Verriegelungszapfen verbunden und weist an seinem anderen Ende ein Drehlagerelement auf, das zur Einstellung des Kopplungszustandes der Bordwandentlastungseinrichtung mit einem an der Kippbrückenbasis vorgesehenen komplementären Drehlagerelement zu einem Drehlager mit einer zur Klappgelenk-Schwenkachse koaxialen Drehachse kombiniert ist. Auf diese Weise werden besondere Vorteile hinsichtlich der Krafteinleitungsverhältnisse beim Verschwenken der ersten Bordwand um die Klapp-Schwenkachse erzielt, da das gesonderte Drehlager Kräfte in die Kippbrückenbasis einleiten und somit die Klappgelenkanordnung entlasten kann.

Vorzugsweise ist das Drehlagerelement eine Lageröffnung im Kopplungshebel, wohingegen das komplementäre Drehlagerelement ein Lagerbolzen ist.

Bei einer demgegenüber alternativen Ausführungsform der Kippbrücke nach der Erfindung ist der Kopplungshebel an einer Drehgelenkverbindungsstelle drehgelenkig mit dem Verriegelungszapfen verbunden und im Abstand von der Drehgelenkverbindungsstelle mit Kopplungsmitteln ausgestattet, die zur Einstellung des Kopplungszustandes der Bordwandentlastungseinrichtung mit komplementären Kopplungsmitteln der ersten Bordwand in Eingriff bringbar sind, und die zur Einstellung des Entkopplungszustandes der Bordwandentlastungseinrichtung in Bezug auf die komplementären Kopplungsmittel der ersten Bordwand außer Eingriff bringbar sind.

Ein Ausführungsbeispiel der Erfindung wird im Folgenden unter Bezugnahme auf die Figuren näher erläutert:
Fig. 1 zeigt eine Kippbrücke nach der Erfindung in einer perspektivischen Darstellung von seitlich-vorne.
Fig. 2 zeigt die Umgebung des vorderen Eckpfostens aus Fig. 1 mit den Komponenten der Bordwandentlastungseinrichtung.
Fig. 3 zeigt eine Vorderansicht eines Bereichs der Kippbrücke aus Fig. 1 mit Andeutung der Schwenkbewegungsmöglichkeiten einer der Bordwandentlastungseinrichtung zugeordneten seitlichen Bordwand der Kippbrücke.
Fig. 4 zeigt in einer der Fig. 3 ähnlichen Vorderansicht eine Variante der Kippbrücke aus Fig. 1-3.

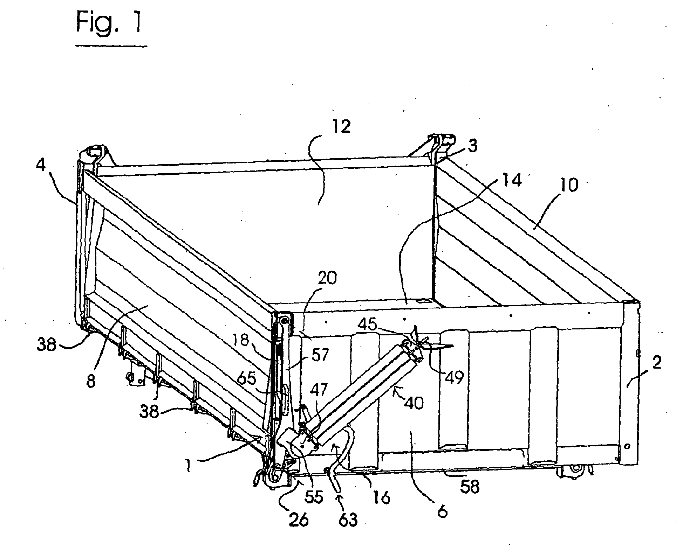

Die Kippbrücke gemäß Fig. 1 umfasst zwischen den Eckpfosten bzw. Rungen 1, 2, 3, 4 eine feststehende vordere Bordwand 6, zwei seitliche Bordwände 8, 10 und eine hintere Bordwand 12. Die Bordwände 6, 8, 10, 12 begrenzen mit der Ladefläche 14 das Ladevolumen der Kippbrücke.

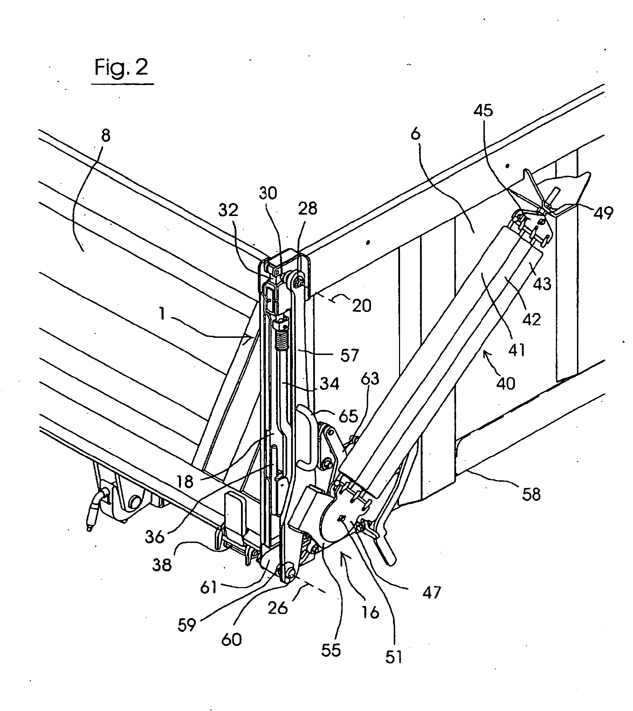

In den Figuren ist nur für die seitliche Bordwand 8 eine Bordwandentlastungseinrichtung 16 eingezeichnet. In entsprechender Weise ist in der Praxis auch eine solche Bordwandentlastungseinrichtung für die seitliche Bordwand 10 vorgesehen. Ferner ist noch darauf hinzuweisen, dass der vordere Eckpfosten 1 ohne Abschlussblech dargestellt ist, um einen in dem Eckpfosten 1 untergebrachten Verriegelungsmechanismus 18 erkennbar zu machen. In den Fig. 1 und 2 ist die Bordwand 8 in ihrer Verschlussstellung verriegelt dargestellt.

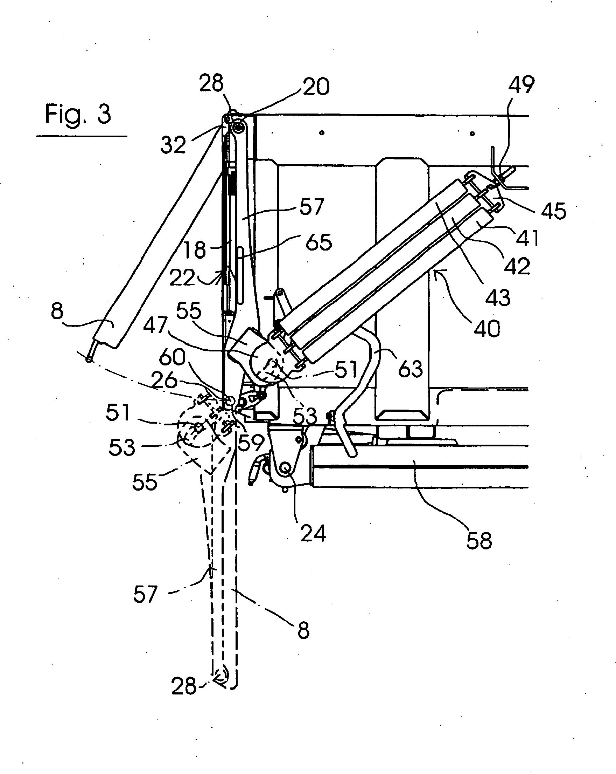

In Fig. 3 ist gezeigt, dass die Bordwand 8 aus ihrer Verschlussstellung heraus um eine obere Pendel-Schwenkachse 20 nach außen verschwenkbar ist, um eine Öffnung 22 zum Entladen von Schüttgut freizugeben. Ein solcher Pendelbetrieb erfolgt bei entsprechend freigegebener Bordwand 8 beim Kippen der Kippbrücke um eine zu der Pendel-Schwenkachse 20 parallele Kippachse 24. In den Figuren ist die Kippbrücke im unverkippten Zustand dargestellt, in welchem die Bordwand 8 normalerweise nicht in der in Fig. 3 mit durchgezogenen Linien dargestellten Weise um die Pendel-Schwenkachse 20 nach außen schwenkt, es sei denn, sie wird in entsprechender Weise angehoben.

In Fig. 3 ist die Bordwand 8 auch mit unterbrochenen Linien dargestellt, um zu zeigen, dass sie wahlweise um eine in Ladebodennähe verlaufende Klapp-Schwenkachse 26 aus ihrer Verschlussstellung heraus nach unten hin aufgeklappt werden kann, um die Öffnung 22 freizugeben.

Die Pendel-Schwenkachse 20 wird durch einen Verriegelungszapfen 28 definiert, der von der Bordwand 8 an deren vorderer Stirnseite im oberen Bereich nach vorn absteht und in der in Fig. 2 dargestellten Verriegelungsstellung in einer Verriegelungsausnehmung 30 des Haltepfostens 1 aufgenommen ist. In dem Haltepfosten 1 ist ein zwischen einer Verriegelungsstellung gemäß Fig. 2 und einer Freigabestellung bewegbar geführter Riegel 32 mit einem zu dessen Betätigung dienenden Hebelmechanismus 34 angeordnet. In der verriegelten Stellung gemäß Fig. 2 hintergreift der Riegel 32 den Verriegelungszapfen 28 und sichert ihn dabei gegen das Herausbewegen aus der Verriegelungsausnehmung 30. Der so gesicherte Verriegelungszapfen 28 bildet mit der Verriegelungsausnehmung 30 und dem Riegel 32 eine Pendelgelenkanordnung. Eine in entsprechender Weise lösbare Pendelgelenkanordnung befindet sich an dem hinteren Haltepfosten 4. Wie schon angesprochen, hat auch die seitliche Bordwand 10 die vorstehend beschriebenen Pendel- bzw. Klappmöglichkeiten. Dies gilt in üblicher Weise auch für die Heckbordwand.

Durch Anziehen des in Fig. 2 erkennbaren Betätigungshebels 36 des Hebelmechanismus 34 nach außen wird erreicht, dass der Riegel 32 aus dem Bereich der Verriegelungsausnehmung 30 heraus nach unten gezogen wird. Der Verriegelungszapfen 28 kann dann nach außen aus seiner Verriegelungsausnehmung 30 herauskommen. Ist dieser Freigabezustand an beiden Pendelgelenkanordnungen hergestellt, so kann die Bordwand 8 um ihre Klapp-Schwenkachse 26 in die Öffnungsstellung verschwenkt werden, wie dies in Fig. 3 mit unterbrochenen Linien dargestellt ist.

Die Klapp-Schwenkachse 26 wird durch Klappgelenke 38 definiert. Die Klappgelenke 38 bestehen ebenfalls aus aneinander festgelegten komplementären Schwenklagerelementen, die bedarfsweise voneinander lösbar sind, um den Pendelbetrieb der Bordwand 8 zu ermöglichen.

Da die Bordwand 8 relativ schwer ist, ist das beim Aufklappen um die Achse 26 darauf wirkende Gewichts-Drehmoment entsprechend groß, wobei noch ein zusätzliches Drehmoment auf Grund nachrutschender Ladung entstehen kann. Ohne Bordwandentlastungseinrichtung wäre die Bordwand 8 von einer Bedienungsperson beim Aufklappen um die Achse 26 nur schwierig handhabbar. Die Bordwandentlastungseinrichtung 16 dient dazu, ein die Aufklappgeschwindigkeit der Bordwand 8 reduzierendes GegenDrehmoment bzw. Rückhaltemoment auf die Bordwand 8 auszuüben. Die Bordwandentlastungseinrichtung 16 umfasst hierzu eine Federanordnung 40 aus im Beipielsfall drei Schraubenzugfedern 41, 42, 43, die gleiche oder ggf. unterschiedliche Federsteifigkeiten haben können. Die Federn 41, 42, 43 sind an ihren Enden an gemeinsamen Halterungsbeschlägen 45, 47 angebracht. Der Halterungsbeschlag 45 ist außen im oberen Bereich der vorderen Bordwand 6 durch Federeinstell- und Befestigungsmittel 49 mit der vorderen Bordwand 6 verbunden. Die Federeinstellmittel 49 ermöglichen die Einstellung von Federvorspannungen. Der untere Halterungsbeschlag 47 der Federanordnung 40 weist einen Anschlusszapfen 51 auf, der in einer im Beispielsfall kontinuierlich gekrümmt verlaufenden Kulissenführungsaussparung 53 eines Kulissenelementes 55 gesichert aufgenommen ist, so dass er sich beim Klapp-Schwenkvörgang der Bordwand 8 in der Kulissenführung 53 relativ zu dem Kulissenelement 55 bewegen kann. Auf diese Weise wird erreicht, dass das Rückhalte-Drehmoment der Federanordung 40 von der jeweiligen Klapp-Schwenkstellung der Bordwand 8 abhängig moduliert wird, um eine möglichst gleichmäßige oder nach sonstigen Gesichtspunkten optimierte Aufklappbewegung zu gewährleisten. Das Kulissenelement 55 befindet sich an einem Kopplungshebel 57, der sich bei geschlossener Bordwand 8 von der Pendel-Schwenkachse 20 bis zur Klappgelenk-Schwenkachse 26 erstreckt. Hinzuzufügen ist noch, dass das Kulissenelement 55 bedarfsweise in einer anderen als der gezeigten Orientierung und/oder an einer anderen Stelle des Kopplungshebels 57 befestigt sein kann und/oder eine andere Kulissenführungsform haben kann, falls eine andere Öffnungscharakteristik der Bordwand 8 gewünscht ist.

Wie aus Fig. 2 zu ersehen ist, ist der Kopplungshebel 57 oben von dem Verriegelungszapfen 28 der Bordwand 8 drehgelenkig durchsetzt. An dem vorn Verriegelungszapfen 28 entfernten Ende weist der Kopplungshebel 57 eine Lageröffnung 59 auf, die einen Lagerbolzen 60 aufnimmt. Der Lagerbolzen 60 ist in einem gesonderten Lager 61 gehalten, das an der unteren Kippbrückenbasis 58 fixiert ist. Der Lagerbolzen 60 und die Lageröffnung 59 bilden ein Drehlager für den Kopplungshebel 57 mit einer der Klappgelenk-Schwenkachse 26 entsprechenden Drehachse. Der Kopplungshebel 57 kann gemeinsam mit der Bordwand 8 um die Klappgelenk-Schwenkachse 26 verschwenkt werden, wobei die Federanordnung 40 auf Zug belastet wird, um das Rückhalte-Drehmoment zu erzeugen. Das gesonderte Bolzenlager 61 kann dabei Kräfte in die Kippbrückenbasis 58 einleiten, so dass die Klappgelenke 38 insoweit entlastet werden.

Ist das Pendellager 28, 30, 32 jeweils geschlossen, so kann der Pendelbetrieb der Bordwand 8 um die Pendel-Schwenkachse 20 unbeeinflusst von der Bordwandentlastungseinrichtung 16 erfolgen. Die Bordwandentlastungseinrichtung 16 befindet sich dann im Entkopplungszustand. Mit 63 ist in den Figuren ein Betätigungsmechanismus zum Lösen und Verriegeln der Klappgelenke 38 bezeichnet.

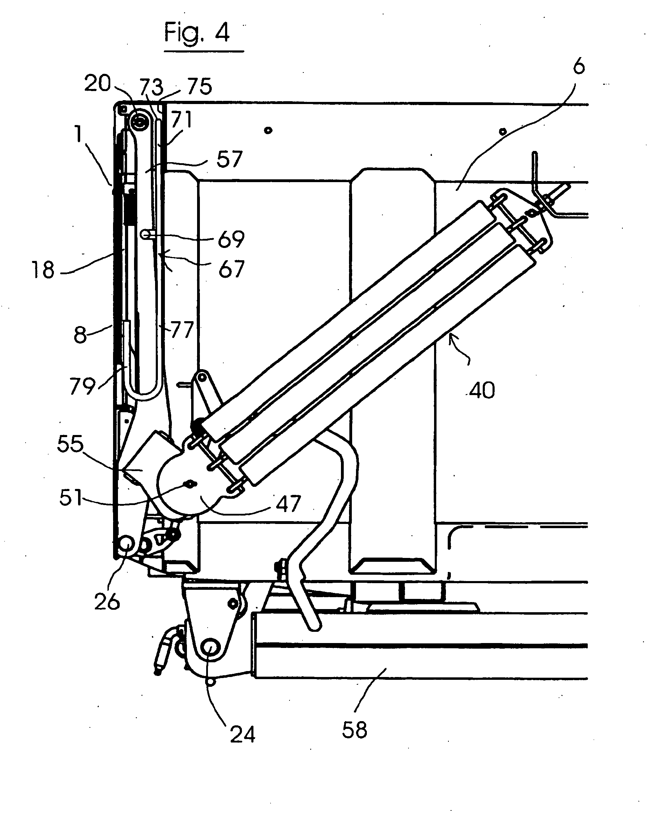

An dem Kopplungshebel 57 in den Fig. 1 - 3 ist ein Bügel 65 befestigt, an dem die Bedienungsperson den Kopplungshebel 57 ergreifen und im Klappbetrieb gemeinsam mit der Bordwand 8 um die Klapp-Schwenkachse 26 aus der Verschlussstellung heraus bewegen kann. Bei der abgewandelten Ausführungsform gemäß Fig. 4 ist anstelle eines solchen Bügels ein Auslösehebel 67 vorgesehen, der an dem Kopplungshebel 57 bei 69 drehbar gelagert ist, wobei der von dem Drehpunkt 69 nach oben abstehende Hebelarm 71 sich mit seinem freien Ende 73 an einem Anschlag 75 des Eckpfostens 1 bzw. der vorderen Bordwand 6 abstützt. Der von dem Drehpunkt 69 nach unten abstehende Hebelarm 77 ist U-förmig gebogen, wobei der freie U-Schenkel 79 als Betätigungsgriff für den Auslösehebel 67 dient. Durch Verschwenken des Auslösehebels 67 im Uhrzeigersinn gemäß Fig. 4 kommt es unter Abstützung des Hebelarmendes 73 an dem Anschlag 75 im Klappbetrieb nach Öffnen der Pendel-Gelenkanordnung 28, 30, 32 zu einer Öffnungsbewegung der Bordwand 8 um die Klapp-Schwenkachse 26. Auf Grund der Hebelübersetzungsverhältnisse kann die Bedienungsperson diese Öffnungsbewegung mit relativ geringem eigenem Kraftaufwand auslösen, und zwar auch dann, wenn die Federanordnung 40 die Bordwand 8 unter Federvorspannung in der Schließstellung zu halten sucht. Letzteres ist insoweit vorteilhaft, als damit Federklappergeräusche und Lagerklappergeräusche in der Pendelgelenkanordnung und der Klappgelenkanordnung während der Fahrt vermieden werden können. Eine Rückstellfeder (nicht gezeigt) an dem Drehlager 69 kann vorgesehen sein, um den Auslösehebel 67 nach Auslenkung aus seiner Normalstellung gemäß Fig. 4 wieder in die Normalstellung zurückzuführen.

Die Bordwandentlastungseinrichtung 16 kommt ohne konventionelle Seilsysteme aus und erlaubt dennoch einen zuverlässigen komfortablen Klapp-Schwenk- und Pendelbetrieb der Bordwand 8.

## Patentansprüche

1. Kippbrücke für ein Kipperfahrzeug, umfassend
- eine Kippbrückenbasis (58) mit einer Ladefläche (14),
- Bordwände (8, 10) zur seitlichen Ladevolumenbegrenzung an den Ladeflächenrändern, von denen wenigstens eine erste Bordwand (8) mittels einer lösbaren unteren Klappgelenkanordnung (38) und einer lösbaren oberen Pendelgelenkanordnung (28, 30, 32) an der Kippbrücke in der Weise festgelegt ist, dass sie wahlweise um eine in Ladebodennähe verlaufende Klapp-Schwenkachse (26) der Klappgelenkanordnung - oder um eine obere Pendel-Schwenkachse (20) der Pendelgelenkanordnung aus ihrer Verschlussstellung heraus in Öffnungsstellungen schwenkbar ist, und
- eine Bordwandentlastungseinrichtung (16) zur Begrenzung der Aufklappgeschwindigkeit der ersten Bordwand (8) bei der Aufklapp-Schwenkbewegung um die Klapp-Schwenkachse (26), wobei die Bordwandentlastungseinrichtung (16) eine Federanordnung (40) zur Ausübung einer der Gewichtskraft der ersten Bordwand (8) bei deren Aufklapp-Schwenkbewegung entgegenwirkenden Kraft aufweist, **dadurch gekennzeichnet, dass** die Badwand entlastungseinrichtung (16) einen Kopplungshebel (57) aufweist, der dazu eingerichtet ist, die erste Bordwand (8) bei deren Aufklapp-Schwenkbewegung kraftübertragend mit der Federanordnung (40) zu verbinden und die erste Bordwand (8) bei deren Schwenkbewegungen um die Pendel-Schwenkachse (20) von der Federanordnung (40) kraftübertragungsmäßig im Wesentlichen zu entkoppeln,
wobei die Federanordnung (40) und der Kopplungshebel (57) durch ein Kulissenelement (55) miteinander verbunden sind, welches eine Kraftübertragungsstelle mit Kutissenführungsspiel im Kraftübertragungsweg zwischen der Federanordnung (40) und dem Kopplungshebel (57) bei der Schwenkbewegung der ersten Bordwand (8) um die Klapp-Schwenkachse (26) bietet.

2. Kippbrücke nach Anspruch 1, wobei das Kulissenelement (55) an dem Kopplungshebel (57) befestigt ist und eine Führungsaussparung (53) aufweist, in der ein Anschlusszapfen (51) der Federanordnung (40) dem Kulissenführungsspiel entsprechend geführt verschiebbar aufgenommen ist.

3. Kippbrücke nach Anspruch 1 oder 2, wobei die Federanordnung (40) aus wenigstens einer Zugfeder (41, 42, 43) und aus Halterungsbeschlägen (45, 47) mit Befestigungsmitteln an den Zugfederenden besteht.

4. Kippbrücke nach einem der vorhergehenden Ansprüche, wobei sich die Federanordnung (40) an einer quer zur ersten Bordwand (8) verlaufenden zweiten Bordwand (6) erstreckt und mit ihrem vom Kopplungshebel (57) entfernten Ende an der zweiten Bordwand (6) befestigt ist.

5. Kippbrücke nach einem der vorhergehenden Ansprüche, wobei die erste Bordwand (8) in ihrer Verschlussstellung an einem in Bezug auf die Kippbrückenbasis (58) ortsfesten Halterungselement (1, 4), insbesondere Haltepfosten, verriegelbar ist und zu diesem Zweck einen Verriegelungszapfen (28) aufweist, der im verriegelten Zustand in einer Verriegelungsausnehmung (30) des Halterungselementes (1, 4) aufgenommen ist, wobei ein an dem Halterungselement (1, 4) zwischen einer Verriegelungsstellung und einer Freigabestellung bewegbar geführter Riegel (32) den Verriegelungszapfen (28) in der Verriegelungsausnehmung (30) sichert und wobei, die Verriegelungsausnehmung (30) und der darin gesicherte Verriegelungszapfen (28) Elemente der Pendelgelenkanordnung bilden, so dass die erste Bordwand (8) nach Lösen der Klappgelenkanordnung (38) schwenkbeweglich um die mit der Achse des Verriegelungszapfens übereinstimmende Pendel-Schwenkachse (20) ist.

6. Kippbrücke nach Anspruch 5, wobei der Kopplungshebel (57) an einem Ende drehgelenkig mit dem Verriegelungszapfen (28) verbunden ist und an seinem anderen Ende ein Drehlagerelement (59) aufweist, das mit einem an der Kippbrückenbasis (58) gehaltenen komplementären Drehlagerelement (60) zu einem Drehlager mit einer zur Klappgelenk-Schwenkachse (26) koaxialen Drehachse kombiniert ist.

7. Kippbrücke nach Anspruch 6, wobei das Drehlagerelement (59) eine Lageröffnung im Kopplungshebel (57) ist und das komplementäre Drehlagerelement (60) ein Lagerbolzen ist, der in der Lageröffnung (59) aufgenommen ist.

8. Kippbrücke nach einem der vorhergehenden Ansprüche,
wobei an dem Kopplungshebel (57) ein zweiarmiger Klappauslösehebel (67) drehbar gelagert ist, der sich bei geschlossener erster Bordwand (8) mit seinem vom Drehpunkt (69) nach oben abstehenden Hebelarm (71) an einem in Bezug auf die Kippbrückenbasis (58) ortsfesten Anschlag (75) abstützen kann und dessen anderer Hebelarm (77) einen Griffabschnitt (79) aufweiset, an dem eine Bedienungsperson den Klappauslösehebel (67) ergreifen und so um den Drehpunkt (69) unter Abstützung des Hebelarmes (71) an dem Anschlag (75) drehen kann, dass sich die erste Bordwand (8) im Klappbetriebszustand aus der Verschlussstellung herausbewegt.

## Claims

1. Tipping body for a dumper truck comprising
- a tipping body base (58) with a loading surface (14),
- side walls (8, 10) for laterally delimiting the load volume at the loading surface edges, of which at least one first side wall (8) is secured by means of a detachable lower fold hinge arrangement (38) and a releasable upper pendulum hinge arrangement (28, 30, 32) on the tipping body in such a way that it can be pivoted optionally about a fold pivot axis (26) of the fold hinge arrangement close to the loading base - or about an upper pendulum pivot axis (20) of the pendulum hinge arrangement from its closed position into opening positions, and
- a side wall relief device (16) for limiting the folding speed of the first side wall (8) during the folding up pivot movement about the fold pivot axis (26), wherein the side wall relief device (16) comprises a spring arrangement (40) for exerting a force acting against the weight of the first side wall (8) during its folding up pivot movement,
**characterised in that** the side wall relief device (16) comprises a coupling lever (57) which is set up to connect the first side wall (8) during its folding up pivot movement in a force transferring manner to the spring arrangement (40), and to uncouple the first side wall (8) during its pivot movements about the pendulum pivot axis (20) from the spring arrangement (40) by transferring force,
wherein the spring arrangement (40) and the coupling lever (57) are connected together by a link element (55) which provides a force transferring point with link guiding play in the force transfer path between the spring arrangement (40) and the coupling lever (57) during the pivot movement of the first side wall (8) about the pivot axis (26).

2. Tipping body according to claim 1, wherein the link element (55) is secured onto the coupling lever (57) and comprises a guiding recess (53), in which a connection pin (51) of the spring arrangement (40) is mounted guided displaceably according to the link guide play.

3. Tipping body according to claim 1 or 2, wherein the spring arrangement (40) consists of at least one tension spring (41, 42, 43) and holding fittings (45, 47) with securing means on the tension spring ends.

4. Tipping body according to one of the preceding claims, wherein the spring arrangement (40) extends on a second side wall (6) at right angles to the first side wall (8) and is secured at its end furthest from the coupling lever (57) on the second side wall (6).

5. Tipping body according to one of the preceding claims, wherein the first side wall (8) can be locked in its closed position on a holding element (1, 4), in particular a holding post, which is fixed in relation to the tipping body base (58), and for this purpose comprises a locking pin (28), which in the locked state is mounted in a locking recess (30) of the holding element (1, 4), wherein a bolt (32) guided movably on the holding element (1, 4) between a locked position and an unlocked position secures the locking pin (28) in the locking recess (30), and
wherein the locking recess (30) and the locking pin (28) secured therein form elements of the pendulum hinge arrangement, so that the first side wall (8) after releasing the hinge arrangement (38) can be moved pivotably about the pendulum pivot axis coinciding with the axis of the locking pin.

6. Tipping body according to claim 5, wherein the coupling lever (57) is connected at one end in a rotary articulated manner with the locking pin (28), and at its other end comprises a rotary bearing element (59), which is combined with a complementary rotary bearing element (60) held on the tipping body base (58) to form a rotary bearing with a rotary axis coaxial to the fold hinge pivot axis (26).

7. Tipping body according to claim 6, wherein the rotary bearing element (59) is a bearing opening in the coupling lever (57) and the complementary rotary bearing element (60) is a bearing bolt, which is mounted in the bearing opening (59).

8. Tipping body according to one of the preceding claims, wherein on the coupling lever (57) a two-arm fold release lever (67) is mounted rotatably, which with a closed first side wall (8) with its lever arm (71) projecting upwards from the point of rotation (69) can support itself on a stop (75), that is fixed in relation to the tipping body base (58), and the other lever arm (77) of which comprises a gripping section (79), on which an operator can grip the fold release lever (67), and thus can rotate about the point of rotation (69) under the support of the lever arm (71) on the stop (75), so that the first side wall (8) in the folding state moves out of the closed position.

## Revendications

1. Benne basculante pour un véhicule à benne, comprenant :
- une base de benne basculante (58) avec une surface de chargement (14),
- des parois de bord (8, 10), servant à assurer la délimitation volumique latérale sur les bords de surface latérale, dont au moins une première paroi de bord (8) est fixée sur la benne basculante, au moyen d'un agencement d'articulation de rabattement inférieur (38) désolidarisable et d'un agencement d'articulation pendulaire (28, 30, 32) supérieur désolidarisable, de manière qu'elle puisse pivoter, au choix, de sa position de fermeture à des positions d'ouvertures, autour d'un axe de pivotement de basculement (26), s'étendant à proximité du fond de chargement, de l'agencement d'articulation de rabattement - ou autour d'un axe de pivotement pendulaire (20) supérieur de l'agencement d'articulation pendulaire, et
- un dispositif de décharge de paroi de bord (16), pour limiter la vitesse d'ouverture par rabattement de la première paroi de bord (8) lors du mouvement de pivotement avec basculement d'ouverture autour de l'axe de pivotement de basculement (26), le dispositif de décharge de paroi de bord (16) présentant un agencement à ressort (40), pour exercer une force s'opposant à la force due au poids de la première paroi de bord (8) lors de son mouvement de pivotement avec basculement d'ouverture, **caractérisée en ce que** le dispositif de décharge de paroi de bord (16) présente un levier de couplage (57), agencé pour relier, avec transmission des efforts, la première paroi de bord (8) à l'agencement à ressort (40) lors de son mouvement de pivotement avec basculement d'ouverture et pratiquement désaccoupler, quant à la transmission des efforts, la première paroi de bord (8) vis-à-vis de l'agencement à ressort (40) lors de ses mouvements de pivotement autour de l'axe de pivotement pendulaire (20),
l'agencement à ressort (40) et le levier de couplage (57) étant reliés ensemble à l'aide d'un élément à coulisse (55) offrant un point de transmission d'effort avec un jeu de guidage de coulisse dans la course de transmission des efforts entre l'agencement à ressort (40) et le levier de couplage (57), lors du mouvement de pivotement de la première paroi de bord (8) autour de l'axe de pivotement de basculement (26).

2. Benne basculante selon la revendication 1, **caractérisée en ce que** l'élément à coulisse (55) est fixé au levier de couplage (57) et présente un évidement de guidage (53), dans lequel un tourillon de raccordement (51) de l'agencement à ressort (40) est logé de façon déplaçable, de manière correspondant au jeu de guidage de coulisse.

3. Benne basculante selon la revendication 1 ou 2, **caractérisée en ce que** l'agencement à ressort (40) est composé d'au moins un ressort de traction (41, 42, 43) et de ferrures de fixation (45, 47) avec des moyens de fixation aux extrémités de ressort de traction.

4. Benne basculante selon l'une des revendications précédentes, **caractérisée en ce que** l'agencement à ressort (40) s'étend sur une deuxième paroi de bord (6), s'étendant transversalement par rapport à la première paroi de bord (8) et est fixée sur la deuxième paroi de bord (6), à son extrémité distante du levier de couplage (57).

5. Benne basculante selon l'une des revendications précédentes, **caractérisée en ce que**, dans sa position de fermeture, la première paroi de bord (8) est susceptible d'être verrouillée sur un élément de fixation (1, 4), en particulier un poteau de maintien, fixe par rapport à la base de benne basculante (58), et présente à cette fin un tourillon de verrouillage (28) qui, à l'état verrouillé, est logé dans un évidement de verrouillage (30) de l'élément de maintien (1, 4), un verrou (32), guidé de façon déplaçable entre une position de verrouillage et une position de libération, sur l'élément de maintien (1, 4), retenant le tourillon de verrouillage (28) dans l'évidement de verrouillage (30), et l'évidement de verrouillage (30) et le tourillon de verrouillage (28) y étant retenu forment des éléments de l'agencement d'articulation pendulaire, de manière que, après désolidarisation de l'agencement d'articulation pendulaire (38), la première paroi de bord (8) soit mobile en pivotement autour de l'axe de pivotement pendulaire (20) coïncidant avec l'axe du tourillon de verrouillage (28).

6. Benne basculante selon la revendication 5, **caractérisée en ce que** le levier de couplage (57) est relié à une extrémité de façon articulée en rotation au tourillon de verrouillage (28), et présente à son autre extrémité un élément formant palier de rotation (59), combiné à un élément formant palier de rotation (60) complémentaire, maintenu sur la base de benne basculante (58), pour former un palier de rotation ayant un axe de rotation coaxial à l'axe de pivotement d'articulation de basculement (26).

7. Benne basculante selon la revendication 6, **caractérisée en ce que** l'élément formant palier de rotation (59) est une ouverture de palier ménagée dans le levier de couplage (57) et l'élément formant palier de rotation (60) complémentaire est un boulon d'axe de palier, logé dans l'ouverture de palier (59).

8. Benne basculante selon l'une des revendications précédentes, sur le levier de couplage (57) étant monté à rotation un levier de déclenchement de basculement (67) à deux bras, pouvant, lorsque la première paroi de bord (8) est fermée, prendre appui, par son bras de levier (71), faisant saillie, vers le haut, du point de rotation (69), sur une butée (75) fixe par rapport à la base de benne basculante (58), et dont l'autre bras de levier (77) présente un tronçon de saisie (79), auquel un opérateur peut saisir le levier de déclenchement de basculement (67) et ainsi tourner autour du point de rotation (69), avec appui du bras de levier (71) sur la butée (75), de manière que la première paroi de bord (8) sorte de la position de fermeture à l'état de fonctionnement basculé.
